# EUROPEAN PATENT APPLICATION

(11) **EP 3 530 774 A1**
(43) Date of publication of application: **28.08.2019**
(21) Application number: 19159650.1
(22) Date of filing: 27.02.2019
(51) Int. Cl.: C23C 18/16, B22F 3/105, C23C 18/18, B33Y 10/00, B33Y 80/00

(54) **A METHOD FOR IMPROVING THE INNER SURFACE QUALITY OF A 3D PRINTOUT**

(30) Priority: 27.02.2018 CN 201810164950
(71) Applicant: Siemens Aktiengesellschaft, 80333 München (DE)
(72) Inventor: LI, Chang Peng, Beijing, Beijing 100102 (CN); ZHOU, Zhong Jiao, Beijing, Beijing 102209 (CN); CHEN, Guo Feng, Beijing, Beijing 100135 (CN)
(74) Representative: Isarpatent

(57) **Abstract**

The present invention provides a method for improving the inner surface quality of a 3D printout, comprising steps of: chemically plating the printout by using a first material to deposit a first material layer on the surface of the printout, and putting the printout into a vacuum furnace for thermal treatment. The present invention can implement filling of surface holes and tiny recesses on the surface of a printout with an internal trench structure, reduce the roughness of inner and outer surfaces of the printout and improve the surface quality of the inner and outer surfaces of the printout. In addition, since the thickness of the first material layer coated on the substrate of the printout is smaller than 5 micrometers, the internal structure, appearance, and dimensional accuracy of the printout remain unaffected.

## Description

### Technical Field

The present invention relates to 3D printing, and more specifically to a method for improving the inner surface quality of a 3D printout.

### Background Art

Additive Manufacturing (AM), also known as 3D printing, has received more and more attention because of its capability of allowing fast manufacturing based on computer-aided design (CAD) model drafts. With 3D printing, parts with complex structures can be manufactured within a short time. The Selected Laser Melting (SLM) process is an additive manufacturing technique mainly used for metal powders for plastic cases. In the SLM process, a metal powder is melted with a high-power laser, and parts/elements are formed layer by layer via 3D CAD inputs. Thus, parts with complex internal trench structures can be manufactured successfully.

Although 3D printing has exciting prospects, the surface quality of a 3D printout, for example, surface roughness and flaws, remains a matter of concern. Surface roughness and flaws of a 3D printout not only affects its general characteristics, such as the flow dynamics of the printout, but also causes early fatigue failure with cracks. Compared with a machined part, a 3D printout has a lower fatigue strength due to the influence of its surface quality.

The outer surface quality of a 3D printout can be easily improved by additional milling machining or sand blasting and therefore it is not a major problem. However, for a part having a complex and small-sized internal trench structure, it is difficult to improve the inner surface quality problem by additional milling machining or sand blasting.

In the prior art, there are proposals of solving the problem of inner surface quality of 3D printouts by electropolishing or abrasive flow polishing. However, the etching speed of electropolishing is significantly influenced by the complicated electric field defined by a printout shape, not to mention possible deterioration effects of the etching processing procedure. Similarly, the grinding speed of abrasive flow polishing is also significantly influenced by the flow dynamics of the complex internal trench of a printout; consequently, it is difficult to keep the accuracy of the internal structure and shape unaffected.

### Summary of the Invention

The present invention provides a method for improving the inner surface quality of a 3D printout, comprising steps of: chemically plating the printout by using a first material to deposit a first material layer on the surface of the printout, and putting the printout into a vacuum furnace for thermal treatment.

Further, before the electroless plating, the method further comprises a step of: cleaning the residual printing powder from the inner surface of the 3D printout.

Further, the step of cleaning further comprises: cleaning the residual printing powder from the inner surface of the 3D printout by using a chemical etching method or an abrasive flow process.

Further, the first material comprises any one of the following: Ni, Co, Cu, Cd, Pb, Sb, Bi, Ag, Au, Pt, Pd, Rh, Ru, Sn, Cr, In, P, B, V, Mo, W, Mn, Re, Fe, Zn, Tl, CuNi, CuCo, CuCd, CuAu, PdNiP, PdCoP, PdZnP, AuAg, AuSn, PbSn, and AuIn.

Further, when the first material is Pt, the step of electroless plating further comprises: chemically plating the printout by using a platinum solution, to deposit a metal platinum layer on the surface of the printout.

Further, a value range of the thickness of the metal platinum layer is 1∼5 micrometers.

Further, the step of thermal treatment further comprises: putting the printout into a vacuum furnace for thermal treatment.

Further, a value range of the air pressure in the vacuum furnace is smaller than 10⁻⁵ mbar, a value range of the temperature in the vacuum furnace is 1050°C∼1250°C, and a value range of the thermal treatment time is 10 min∼2 h.
Further, before the step of electroless plating, the method further comprises a step of: performing 3D printing according to a predetermined model to obtain a printout.

The present invention can implement filling of surface holes and tiny recesses on the surface of a printout with an internal trench structure, reduce the roughness of inner and outer surfaces of the printout and improve the surface quality of the inner and outer surfaces of the printout. In addition, since the thickness of the first material layer coated on the substrate of the printout is smaller than 5 micrometers, the internal structure, appearance, and dimensional accuracy of the printout will not be unaffected.

The method for processing the surfaces of a printout according to the present invention is easy to control and operate and can avoid material corrosion of a 3D printout, which is possible when a chemical etching or electrochemical corrosion process is used. If a superalloy is used as the substrate material, because of the formation of compounds of aluminum and platinum in the step of thermal treatment, the present invention can provide further improve its antioxidation capability (the oxidation resistance of the superalloy). In addition, the present invention is cost-effective.

### Brief Description of the Drawings

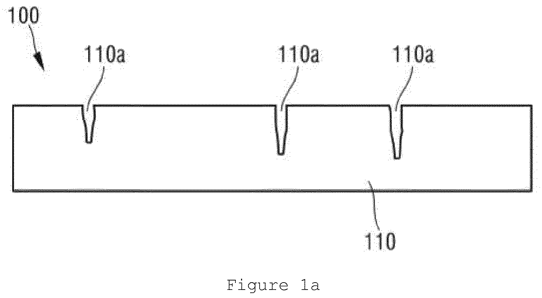

Figure 1a is a process flow diagram of the step of the inner surface cleaning in the method for improving the inner surface quality of a 3D printout according to an embodiment of the present invention.

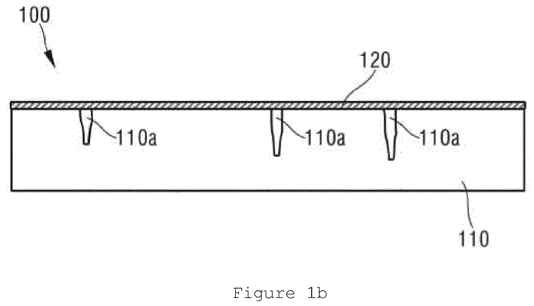

Figure 1b is a process flow diagram of the step of electroless plating in the method for improving the inner surface quality of a 3D printout according to an embodiment of the present invention.

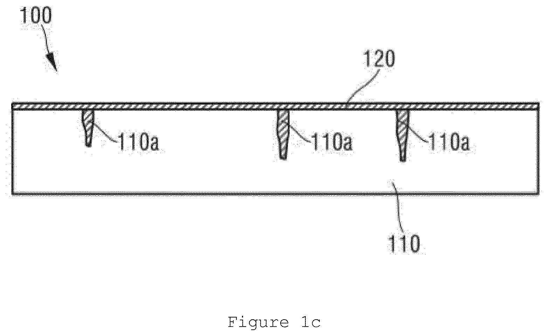

Figure 1c is a process flow diagram of the step of thermal treatment in the method for improving the inner surface quality of a 3D printout according to an embodiment of the present invention.

### Specific Embodiments

Specific embodiments of the present invention will be explained below with reference to the attached drawings.

The present invention provides a method for improving the inner surface quality of a 3D printout, comprising steps of:
First, executing a step S1 of performing 3D printing according to a predetermined model to obtain a printout, wherein the selective laser melting apparatus comprises a forming cylinder, in which a piston is disposed, said piston being capable of moving up and down. The piston is provided with a printing plate, and a metal powder is placed in the space on the printing plate. The piston adjusts the printing space in the forming cylinder by moving up and down. The selective laser melting apparatus performs laser scanning of the metal powder to break down the metal powder into powder matrixes, and then performs laser scanning of the powder matrixes until the powder matrixes are sintered from the bottom up to become a printout having a predetermined shape.

Then, performing a step S2 of cleaning the residual printing powder from the inner surface of the 3D printout, wherein the printout is provided with a plurality of internal trenches. In this step, pre-cleaning removal of the residual metal powder in the internal trenches that adheres to the inner surface of the printout is performed. Typically, according to the present invention, the printout can be cleaned by a chemical etching method or an abrasive flow process. It should be noted that an abrasive flow process is only suitable for removing and cleaning powder that is persistently small and has stayed only a short time. By using this step, the shape of the inner surface of the printout, especially the shape of an internal trench, will not be affected.

Figure 1a shows a cross-sectional view of the structure of the printout 100. Specifically, the printout 100 is a superalloy element, its substrate 110 having a plurality of cracks 110a. In addition, since the printout 100 also has a plurality of internal trenches, much residual printing metal powder exists in the cracks 110a or the internal trenches or cracks thereof. S2 is intended to clean up the residual metal powder.

Then, performing a step S3 of chemically plating the printout by using a first material to deposit a first material layer on the surface of the printout. Electroless plating, also known as auto-catalytic plating, is a no-current plating method. Specifically, electroless plating comprises a plurality of simultaneous reactions in an aqueous solution, without the need to connect to any external power sources. One of the advantages of electroless plating is that it is free from flux-density and has no external power source. Therefore, electroless plating can be performed without considering the geometrical structure of a workpiece. In addition, the plating can be deposited on a nonconductive surface after an appropriate pre-plating catalyst is used. After the surfaces of a printout are cleaned, it is easy to deposit a platinum metal layer on its surfaces by electroless plating. Electroless plating is especially suitable for forming deposits of pure metals and metal alloys. In addition, the surface of a material layer deposited by electroless plating is more uniform, and the deposit thickness of the material layer can be controlled to smaller than 1 micrometer.

The first material comprises any one of the following: Ni, Co, Cu, Cd, Pb, Sb, Bi, Ag, Au, Pt, Pd, Rh, Ru, Sn, Cr, In, P, B, V, Mo, W, Mn, Re, Fe, Zn, Tl, CuNi, CuCo, CuCd, CuAu, PdNiP, PdCoP, PdZnP, AuAg, AuSn, PbSn, and AuIn.

According to a preferred embodiment of the present invention, the first material is a metallic foil. Specifically, the printout is chemically plated by using a platinum solution to deposit a metal platinum layer on the surface of the printout, the platinum solution being a mixture of platinum and organic matter, easy to adhere to the surface of the substrate 110.

As shown in Figure 1b, after the step S3 is performed, a metal platinum layer 120 is deposited on the substrate 110 of the printout 100. Further, the value range of the thickness of the metal platinum layer is 1∼5 micrometers, wherein a part of the metal platinum layer 120 has permeated into the cracks 110a, solving to a certain extent the problem of inner surface roughness of the printout 110.

Finally, performing a step S4 of placing the printout into a vacuum furnace for thermal treatment to make the deposited metal platinum layer 120 more stable. Specifically, after an appropriate coating material is applied according to the present invention, a thermal treatment material element will further seal the cracks on the inner and outer surfaces of the printout by permeation and reaction, thereby improving the fatigue life of the printout. Specifically, as shown in Figure 1c, at a high temperature, the Pt (platinum) in the coated metal platinum layer 120 permeates into the superalloy substrate 110 due to thermal stress. The Al (aluminum) and Ni (nickel) in the substrate 110 also permeates into the metal platinum layer 120 due to a chemical concentration difference. In the vacuum thermal treatment process, when the Pt reaches cracks 110a, the Pt reacts with γ (a matrix phase) and γ' (a reinforcing phase) in the material to form Pt₃Al and (PtNi)₃Al, which are compounds of metal aluminum and platinum, because Al and Pt are more stable. In addition, since the Pt atom is much larger than the Ni atom, such a chemical reaction will lead to a volume expansion. Therefore, the compounds of metal aluminum and platinum, namely, Pt₃Al and (PtNi)₃Al, fill and seal the cracks 110a, further promoting the volume expansion in the chemical reaction in this step.

Further, in order to prevent possible oxidation of the printout, the step of thermal treatment is performed in a vacuum furnace, wherein the value range of the air pressure in the vacuum furnace is smaller than 10⁻⁵ mbar, the value range of the temperature in the vacuum furnace is 1050°C∼1250°C, and the value range of the thermal treatment time is 10 min∼2 h.Preferably, the printout is treated for 30 minutes at a temperature of 1150°C in the vacuum furnace.

The present invention can implement filling of surface holes and tiny recesses on the surface of a printout with an internal trench structure, reduce the roughness of the inner and outer surfaces of the printout and improve the surface quality of the inner and outer surfaces of the printout. In addition, since the thickness of the first material layer coated on the substrate of the printout is smaller than 5 micrometers, the internal structure, appearance, and dimensional accuracy of the printout will not be affected.

The method for processing the surfaces of a printout according to the present invention is easy to control and operate, and can avoid material corrosion of a 3D printout, which is possible when a chemical etching or electrochemical corrosion process is used. If a superalloy is used as the substrate material, because of the formation of compounds of aluminum and platinum in the step of thermal treatment, the present invention can further improve its antioxidation capability (the oxidation resistance of the superalloy). In addition, the present invention is cost-effective.

While the present invention has been described in detail with the above-mentioned preferred embodiments, it should be understood that the present invention is not limited to these disclosed embodiments, and various modifications and alterations of the present invention will be readily apparent to those of ordinary skill in the art. Therefore, the protection scope of the present invention should be defined by the Claims that are attached. In addition, no reference numeral in the Claims should be construed as limiting any claims; the word "comprising" does not exclude means or steps that are not listed in other claims or specifications; words such as "first" and "second" only indicate a name, instead of indicating any specific sequence.

## Claims

1. A method for improving the inner surface quality of a 3D printout, comprising steps of:
chemically plating the printout by using a first material to deposit a first material layer on the surface of the printout; and
putting the printout into a vacuum furnace for thermal treatment.

2. The method for improving the inner surface quality of a 3D printout as claimed in claim 1, **characterized in that**, before the electroless plating, the method further comprises a step of:
cleaning the residual printing powder from the inner surface of the 3D printout.

3. The method for improving the inner surface quality of a 3D printout as claimed in claim 2, **characterized in that** the step of cleaning further comprises:
cleaning the residual printing powder from the inner surface of the 3D printout by using a chemical etching method or an abrasive flow process.

4. The method for improving the inner surface quality of a 3D printout according to any of the proceeding claims, **characterized in that** the first material comprises any one of the following: Ni, Co, Cu, Cd, Pb, Sb, Bi, Ag, Au, Pt, Pd, Rh, Ru, Sn, Cr, In, P, B, V, Mo, W, Mn, Re, Fe, Zn, Tl, CuNi, CuCo, CuCd, CuAu, PdNiP, PdCoP, PdZnP, AuAg, AuSn, PbSn, and AuIn.

5. The method for improving the inner surface quality of a 3D printout according to any of the proceeding claims, **characterized in that** when the first material is Pt, the step of electroless plating further comprises:
chemically plating the printout by using a platinum solution to deposit a metal platinum layer on the surface of the printout.

6. The method for improving the inner surface quality of a 3D printout as claimed in claim 5, **characterized in that** a value range of the thickness of the metal platinum layer is 1∼5 micrometers.

7. The method for improving the inner surface quality of a 3D printout according to any of the proceeding claims, **characterized in that** the step of thermal treatment further comprises: putting the printout into a vacuum furnace for thermal treatment.

8. The method for improving the inner surface quality of a 3D printout as claimed in claim 5 or 7, **characterized in that** a value range of the air pressure in the vacuum furnace is smaller than 10⁻⁵ mbar, a value range of the temperature in the vacuum furnace is 1050°C∼1250°C, and a value range of the thermal treatment time is 10 min∼2 h.

9. The method for improving the inner surface quality of a 3D printout according to any of the proceeding claims, **characterized in that** before the step of electroless plating, the method further comprises a step of: performing 3D printing according to a predetermined model to obtain a printout.
